# FASCICULE DE BREVET EUROPEEN

(11) **EP 3 932 045 B1**
(45) Date de publication et mention de la délivrance du brevet: **14.08.2024**
(21) Numéro de dépôt: 20713714.2
(22) Date de dépôt: 24.02.2020
(51) Int. Cl.: H04M 1/724, H04M 1/72436, H04M 1/72439, H04W 24/08, H04W 88/02, H04L 65/1069, H04L 65/401

(54) **PROCÉDÉS ET INTERFACES DE GESTION D'UNE INTERFACE UTILISATEUR D'UN TERMINAL DE COMMUNICATION D'UNE COMMUNICATION EN COURS, ET DE CONTRÔLE DE L'INTERFACE UTILISATEUR**
VERFAHREN UND SCHNITTSTELLEN ZUR VERWALTUNG EINER BENUTZERSCHNITTSTELLE EINES KOMMUNIKATIONSENDGERÄTES IN EINER LAUFENDEN KOMMUNIKATION UND ZUR ÜBERWACHUNG DER BENUTZERSCHNITTSTELLE
METHODS AND INTERFACES FOR MANAGING A USER INTERFACE OF A COMMUNICATION TERMINAL IN ONGOING COMMUNICATION, AND FOR MONITORING THE USER INTERFACE

(30) Priorité: 25.02.2019 FR 1901877
(43) Date de publication de la demande: 05.01.2022
(73) Titulaire: Orange, 92130 Issy-les-Moulineaux (FR)
(72) Inventeur: THOMAS, Henry, 92326 CHÂTILLON CEDEX (FR); BISHARA MELEKA, Andrew, 92326 CHÂTILLON CEDEX (FR); GAMAL, Mahmoud, 92326 CHÂTILLON CEDEX (FR); MAGED, Ahmed, 92326 CHÂTILLON CEDEX (FR)
(86) Numéro de dépôt international: PCT/FR2020/050346
(87) Numéro de publication internationale: WO 2020/174168

(56) Documents cités:
- EP-A1- 1 988 699
- EP-A1- 2 685 701
- WO-A1-2017/070797
- US-A1- 2016 205 240

## Description

### Domaine technique

L'invention concerne la gestion d'une interface utilisateur d'un terminal de communication impliqué dans une communication en cours par un terminal de communication, nommé terminal initiateur, à l'origine d'une opération relative à une communication en cours tel qu'un changement de mode de communication.

### État de la technique

Actuellement, lors de l'établissement d'une communication, l'interface utilisateur du terminal appelant reproduit, préalablement au déclenchement de l'établissement, une liste d'au moins un contact sélectionnable (pour chaque contact le ou les modes de communication utilisables pour établir une communication avec ce contact), et/ou un élément déclencheur d'une capture d'un identifiant de communication tel qu'une adresse email, un numéro de téléphone... L'utilisateur du terminal appelant interagit avec l'interface utilisateur pour déclencher une communication dans un mode de communication déterminé avec un terminal de communication appelé éventuellement associé au contact sélectionné.

Durant l'établissement de la communication, l'interface utilisateur du terminal appelant reproduit généralement au moins l'identifiant du terminal de communication appelé, éventuellement un identifiant de l'utilisateur du terminal de communication appelé (nom, pseudo, alias, etc.), le réseau de communication utilisé, éventuellement la puissance du réseau de communication utilisé pour le terminal de communication appelant, le statut de la communication (établissement en cours, occupé...), etc. En parallèle, l'interface utilisateur du terminal de communication appelé reproduit l'identifiant du terminal de communication appelant, éventuellement un identifiant de l'utilisateur du terminal de communication appelant (nom, pseudo, alias, etc.), le réseau de communication utilisé, éventuellement la puissance du réseau de communication utilisé pour le terminal de communication appelé, le statut de la communication (établissement en cours, occupé...), etc. Durant la communication, ces mêmes informations restent reproduites respectivement par l'interface utilisateur du terminal de communication appelant et l'interface utilisateur du terminal de communication appelé. Le statut de communication est alors communication en cours.

Les terminaux de communication actuels, notamment les terminaux de communication mobiles, permettant généralement plusieurs modes de communications :
- soit en changeant de réseau de communication : téléphonie mobile, téléphonie IP sur réseau mobile ou fixe ;
- soit en changeant de modalité d'échanges : voix, vidéo, texte, etc.

Généralement, lorsqu'une communication est démarrée dans un mode de communication donnée, elle est effectuée totalement dans ce mode de communication même si la connexion et/ou la se dégrade. En effet, lorsqu'un utilisateur d'un terminal de communication n'entend plus son interlocuteur durant une communication, il clôt généralement la communication en cours pour la renouveler dans le même mode de communication. Or, la nouvelle communication établie peut se retrouver dans les mêmes mauvaises conditions que la communication clôturée ce qui ne résous par le problème de l'utilisateur.

En outre, l'interlocuteur peut être désorienté par cette clôture unilatérale de la communication, l'amenant à agir notamment en tentant de rétablir la communication généralement dans le même mode de communication avec le risque de communications croisées, et donc d'établissement de communication qui échouent des deux côtés. Une autre action de l'interlocuteur peut être de mettre son terminal de communication dans un statut « hors connexion » tel que le mode avion des téléphones mobiles car il pense la communication terminée.

La demande de brevet européenne EP2685701 propose de pouvoir basculer entre différents modes d'entrées lors d'une communication permettant passer notamment d'un chat à un appel sur l'un des terminaux de communication. Le terminal affichant à tout moment le mode en cours d'utilisation, ainsi le terminal initiateur du changement affiche, après basculement, le nouveau mode. Notamment, l'utilisateur du terminal interlocuteur de la communication en cours peut néanmoins, lors de ce basculement, être amené à interrompre la communication en cours en raison du délai et/ou la dégradation de communication induit(e) par le basculement de mode.

De même, la demande de brevet américaine US201605240 propose une méthode de contrôle de mode d'appel avec un affichage uniquement d'un menu de basculement de mode. Le basculement déclenche un affichage d'un message d'information du basculement effectué sur le terminal initiateur du basculement. Donc, cette méthode de contrôle du basculement présente notamment aussi l'inconvénient que l'utilisateur du terminal interlocuteur de la communication en cours peut néanmoins, lors de ce basculement, être amené à interrompre la communication en cours en raison du délai et/ou la dégradation de communication induit(e) par le basculement de mode.

### Exposé de l'invention

Un des buts de la présente invention est de remédier à des inconvénients de l'état de la technique.

Un objet de l'invention est un procédé de gestion d'interface utilisateur d'au moins un terminal de communication par un terminal initiateur lors d'une communication en cours entre des terminaux de communication dont le terminal initiateur et au moins un terminal correspondant, le procédé de gestion d'interface utilisateur comportant, au moins préalablement à un changement, déclenché par le terminal initiateur, de mode de communication de la communication en cours, une fourniture de données de signalisation du changement à l'interface utilisateur du au moins un terminal de communication, les données de signalisation du changement étant aptes à commander l'interface utilisateur d'un terminal de communication.

Ainsi, si le terminal initiateur déclenche un changement du mode de communication de la communication en cours avec au moins un terminal correspondant, l'interface utilisateur d'au moins un terminal de communication tient compte, lors de la communication en cours, du changement permettant de réduire voire d'éviter les risques les risques d'échec du changement de mode de communication de la communication en cours et donc de clôture intempestive de la communication en cours.

Suivant les variantes de mise en oeuvre de l'invention, le terminal initiateur fourni les données de signalisation du changement à l'interface utilisateur d'un ou plusieurs des terminaux de communication de la communication en cours, notamment du terminal initiateur et/ou d'un ou plusieurs terminaux correspondants. Ainsi, plus les données de signalisation du changement sont fournies à un grand nombre d'interfaces utilisateur de terminaux de communication de la communication, plus la probabilité d'échec du changement de mode de communication est réduite.

En outre, lorsque les données de signalisation du changement ne sont pas fournies aux interfaces utilisateur de tous les terminaux de communication de la communication en cours, la probabilité d'échec du changement de mode de communication est réduite si les données de signalisation du changement sont fournies à une interface utilisateur d'un terminal correspondant plutôt qu'à une interface utilisateur du terminal initiateur.

Avantageusement, la fourniture de données de signalisation du changement à l'interface utilisateur du au moins un terminal de communication comporte une transmission des données de signalisation du changement à au moins un terminal correspondant, les données de signalisation du changement étant aptes à commander l'interface utilisateur du terminal correspondant.

Avantageusement, le procédé de gestion comporte une génération de données de signalisation du changement en fonction du changement de mode de communication déclenché.

Avantageusement, les données de signalisation du changement préalables au changement de mode de communication intègrent une commande de blocage de l'interface utilisateur du terminal de communication durant le changement de mode de communication.

Ainsi, non seulement l'utilisateur du terminal de communication est éventuellement informé du changement en cours d'exécution mais, en plus, l'utilisateur du terminal de communication ne peut pas interagir le terminal de communication notamment pour clore la communication en cours ou modifier le mode de communication de la communication en cours évitant ainsi complètement les risques d'échec du changement de mode de communication et de clôture intempestive de la communication.

Avantageusement, les données de signalisation du changement intègrent un signal de reproduction d'informations relatives au changement de mode de communication.

Ainsi, l'utilisateur du terminal de communication est informé du changement en cours d'exécution réduisant ainsi complètement les risques d'échec du changement de mode de communication et de clôture intempestive de la communication.

Avantageusement, le procédé de gestion comporte, dès la fin du changement de mode de communication de la communication en cours, une fourniture, à au moins un terminal de communication, de données de signalisation du fin de changement apte à commander le retour de l'interface utilisateur du terminal correspondant dans un état nominal.

Ainsi, l'interface utilisateur du terminal correspondant revient dans un mode nominal lors d'une communication.

Avantageusement, les données de signalisation du fin de changement intègrent une commande de déblocage de l'interface utilisateur.

Ainsi, l'utilisateur du terminal de communication peut à nouveau interagir avec le terminal de communication lorsque le changement est terminé.

Avantageusement, le procédé de gestion d'interface utilisateur comporte une autorisation de changement de mode de communication, l'autorisation de changement de mode de communication empêchant le changement de mode de communication de la communication en cours tant que les données de signalisation du changement ne sont pas fournies à au moins l'interface utilisateur du au moins un terminal correspondant.

Un objet de l'invention est également un procédé de contrôle d'une interface utilisateur d'un terminal de communication lors d'une communication entre des terminaux de communication dont un terminal initiateur et au moins un terminal correspondant, le procédé de contrôle comportant, au moins préalablement à un changement, déclenché par le terminal initiateur, de mode de communication de la communication en cours, une modification d'au moins un paramètre de l'interface utilisateur du terminal de communication sur commande de données de signalisation du changement fournies par le terminal initiateur.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif et étant conçus pour commander l'exécution des différentes étapes de ce procédé.

L'invention vise donc aussi un programme comprenant des instructions de code de programme pour l'exécution des étapes d'au moins un procédé parmi les suivants :
- procédé de gestion d'interface utilisateur d'au moins un terminal de communication par un terminal initiateur lors d'une communication en cours,
- procédé de contrôle d'une interface utilisateur d'un terminal de communication,
lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est encore une interface de gestion d'un terminal initiateur ayant déclenché un changement de mode de communication lors d'une communication en cours entre des terminaux de communication dont le terminal initiateur et au moins un terminal correspondant, comportant un fournisseur de données de signalisation du changement à une interface utilisateur d'un terminal de communication de la communication en cours, les données de signalisation du changement étant aptes à commander l'interface utilisateur d'un terminal de communication, le fournisseur étant déclenché préalablement au changement de mode de communication.

Un objet de l'invention est, en outre, une interface utilisateur d'un terminal correspondant lors d'une communication entre des terminaux de communication dont un terminal initiateur et au moins un terminal correspondant, l'interface utilisateur du terminal correspondant comporte un modificateur d'au moins un paramètre de l'interface utilisateur du terminal correspondant sur commande des données de signalisation du changement reçues du terminal initiateur, le modificateur étant mis en oeuvre au moins préalablement à un changement, déclenché par le terminal initiateur, de mode de communication de la communication en cours.

Un objet de l'invention est également une interface utilisateur d'un terminal initiateur lors d'une communication entre des terminaux de communication dont un terminal initiateur et au moins un terminal correspondant, l'interface utilisateur du terminal initiateur comportant un modificateur d'au moins un paramètre de l'interface utilisateur du terminal initiateur sur commande des données de signalisation du changement fournies par le terminal initiateur, le modificateur étant mis en oeuvre au moins préalablement à un changement, déclenché par le terminal initiateur, de mode de communication de la communication en cours.

Un autre objet de l'invention est un terminal initiateur comportant :
- un commutateur de mode de communication mettant en oeuvre, sur commande du terminal initiateur, un changement de mode de communication d'une communication en cours entre le terminal initiateur et au moins un terminal correspondant,
- une interface utilisateur selon l'invention, et
- une interface de gestion selon l'invention.

Avantageusement, le terminal initiateur comporte, en outre :
- une première interface de communication avec un premier réseau de communication mettant en oeuvre un premier mode de communication, et
- au moins une deuxième interface de communication avec un deuxième réseau de communication distinct du premier réseau de communication mettant en oeuvre au moins un deuxième mode de communication.

Un objet de l'invention est aussi un terminal correspondant comportant :
- une interface de communication apte à recevoir des données de signalisation de communication d'un terminal initiateur d'une communication en cours et à modifier des paramètres de l'interface de communication en fonction des données de signalisation de communication, les données de signalisation de communication étant apte à autoriser un changement de mode de communication de la communication en cours par le terminal correspondant, et
- une interface utilisateur selon l'invention.

Avantageusement, le terminal correspondant comporte, en outre :
- une première interface de communication avec un premier réseau de communication mettant en oeuvre un premier mode de communication, et
- au moins une deuxième interface de communication avec un deuxième réseau de communication distinct du premier réseau de communication mettant en oeuvre au moins un deuxième mode de communication.

### Brève description des dessins

Les caractéristiques et avantages de l'invention apparaîtront plus clairement à la lecture de la description, faite à titre d'exemple, et des figures s'y rapportant qui représentent :
[Fig 1] Figure 1, un schéma simplifié d'un procédé de gestion d'interface utilisateur de terminaux de communication lors d'une communication en cours selon l'invention,
[Fig 2] Figure 2, un schéma simplifié d'un procédé de contrôle d'une interface utilisateur d'un terminal de communication lors d'une communication en cours selon l'invention,
[Fig 3] Figure 3, un schéma simplifié des échanges dans une architecture de communication mettant en oeuvre les procédés de l'invention,
[Fig 4] Figure 4, un schéma simplifié d'une architecture de communication comportant des terminaux de communication mettant en oeuvre les dispositifs de l'invention,
[Fig 5a] Figure 5a, une illustration simplifiée des interfaces utilisateur de terminaux de communication selon l'invention préalablement au déclenchement du changement de mode de communication,
[Fig 5b] Figure 5b, une illustration simplifiée des interfaces utilisateur de terminaux de communication selon l'invention lors du déclenchement du changement de mode de communication sur action de l'utilisateur d'un terminal initiateur,
[Fig 5c] Figure 5c, une illustration simplifiée des interfaces utilisateur de terminaux de communication selon l'invention lors du déclenchement du changement de mode de communication sur acceptation de l'utilisateur d'un terminal initiateur d'un proposition du terminal initiateur,
[Fig 5d] Figure 5d, une illustration simplifiée des interfaces utilisateur de terminaux de communication selon l'invention mettant en oeuvre une première variante de l'invention,
[Fig 5e] Figure 5e, une illustration simplifiée des interfaces utilisateur de terminaux de communication selon l'invention mettant en oeuvre une deuxième variante de l'invention,
[Fig 5f] Figure 5f, une illustration simplifiée des interfaces utilisateur de terminaux de communication selon l'invention après le changement de mode de communication.

Le procédé de gestion d'interface utilisateur IU_MNGT d'au moins un terminal de communication est mis en oeuvre par un terminal initiateur Tl lors d'une communication SS en cours entre des terminaux de communication dont le terminal initiateur Tl et au moins un terminal correspondant TC. Le procédé de gestion d'interface utilisateur IU_MNGT comporte, au moins préalablement à un changement SW, déclenché *sw_trg* par le terminal initiateur Tl, de mode de communication de la communication en cours, une fourniture de données de signalisation du changement SG_PV à l'interface utilisateur du au moins un terminal de communication T_IU, TI_IU, TC_IU. Les données de signalisation du changement *sg, sg_{TI}, sg_{TC}, sgd, sgd_{TI}, sgd_{TC}, sge, sge_{TI}, sge_{TC}* sont aptes à commander l'interface utilisateur d'un terminal de communication T_IU, TI_IU, TC_IU.

En particulier, la fourniture de données de signalisation du changement SG_PV à l'interface utilisateur du au moins un terminal de communication TC_IU comporte une transmission des données de signalisation du changement SG_TR à au moins un terminal correspondant TC. Les données de signalisation du changement *sg_{TC}, sgd_{TC}, sge_{TC}* sont aptes à commander l'interface utilisateur du terminal correspondant TC_IU.

En particulier, le procédé de gestion comporte une génération SG_GN de données de signalisation du changement *sg, sg_{TI}, sg_{TC}, sgd, sgd_{TI}, sgd_{TC}, sge, sge_{TI}, sge_{TC}* en fonction du changement de mode de communication déclenché *sw_trg(m1,m2).*

Suivant les modes de réalisation du procédé de gestion d'interface utilisateur IU_MNGT, la fourniture de données de signalisation du changement SG_PV comporte notamment une ou plusieurs des étapes suivantes :
- génération de données de signalisation du changement SG_GN,
- transmission de données de signalisation du changement SG_TR à destination d'au moins une interface utilisateur d'un terminal correspondant de la communication en cours.

En particulier, les données de signalisation du changement préalables au changement de mode de communication *sg, sg_{TI}, sg_{TC}, sgd, sgd_{TI}, sgd_{TC}* intègrent une commande de blocage *ni_cmd* de l'interface utilisateur du terminal de communication T_IU, TI_IU, TC_IU durant le changement de mode de communication SWPh. Eventuellement, la génération de données de signalisation du changement SG_GN comporte une intégration SG_INT d'une commande de blocage *ni_cmd* de l'interface utilisateur du terminal de communication T_IU, TI_IU, TC_IU durant le changement de mode de communication SWPh.

En particulier, les données de signalisation du changement *sg, sg_{TI}, sg_{TC}, sgd, sgd_{TI}, sgd_{TC}, sge, sge_{TI}, sge_{TC}* intègrent un signal de reproduction *sr_{sw}(m1,m2)* d'informations relatives au changement de mode de communication. Eventuellement, la génération de données de signalisation du changement SG_GN comporte une intégration SG_INT d'un signal de reproduction *sr_{sw}(m1,m2)* d'informations relatives au changement de mode de communication dans les données de signalisation du changement.

En particulier, l'intégration SG_INT comporte l'intégration dans les données de signalisation du changement d'une ou plusieurs données parmi les suivantes :
- commande de modification d'interaction *mi_cmd*, tel que commande de blocage d'interface utilisateur *ni_cmd* ou commande de déblocage *oi_cmd*, etc.
- signal de reproduction d'informations relatives au changement de mode de communication *sr_{sw}(m1,m2)* comportant notamment un message à reproduire comportant au moins une parmi les informations suivantes :
   - le mode de communication avant le changement m1, aussi nommé mode de départ,
   - le mode de communication après le changement m2, aussi nommé mode d'arrivée,
   - un identifiant du terminal initiateur,
   - une donnée relative au type de changement: automatique, poussé, manuel, etc.
   - une donnée de cause de changement : mauvaise qualité, problème de connexion, etc.

Partype de changement automatique est entendu que le terminal initiateur met en oeuvre un procédé de surveillance des différents modes de communication utilisable pour la communication en cours entre le terminal initiateur et le(s) terminal(ux) correspondant(s). Le procédé de surveillance déclenche un changement de mode de communication en fonction de critères de changement prédéfini tels que des données de qualité de la communication en cours inférieures à un seuil de qualité prédéfini, ou une différence de qualité entre la communication en cours et un autre mode de communication négative et/ou inférieur à un delta prédéfini, une fréquence de problème de connexion de la communication en cours supérieur à un seuil de fréquence prédéfini, etc.

Par type de changement poussé est entendu que le terminal initiateur met en oeuvre un procédé de surveillance des différents modes de communication utilisable pour la communication en cours entre le terminal initiateur et le(s) terminal(ux) correspondant(s). Le procédé de surveillance déclenche une proposition de changement de mode de communication à l'utilisateur du terminal initiateur notamment en poussant la reproduction d'un message de proposition de changement. Le déclenchement de la proposition de changement est fonction de critères de changement prédéfini tels que des données de qualité de la communication en cours inférieures à un seuil de qualité prédéfini, ou une différence de qualité entre la communication en cours et un autre mode de communication négative et/ou inférieur à un delta prédéfini, une fréquence de problème de connexion de la communication en cours supérieur à un seuil de fréquence prédéfini, etc. Eventuellement, le message de proposition reproduit est un message interactif permettant à l'utilisateur de sélectionner le déclenchement du changement de mode de communication proposé ou le maintien dans le mode de communication de la communication en cours.

Partype de changement manuel est entendu que l'interface utilisateur du terminal initiateur reproduit des éléments sélectionnables correspondant à chaque mode de de communication utilisable pour la communication en cours entre le terminal initiateur et le(s) terminal(ux) correspondant(s), et que l'utilisateur sélectionne, durant la communication en cours, en interagissant avec un élément sélectionnable reproduit un mode de communication différent de celui utilisé par la communication en cours déclenchant ainsi un changement de mode de communication de la communication en cours.

En particulier, le procédé de gestion IU_MNGT comporte, dès la fin du changement de mode de communication de la communication en cours SW_fn, une fourniture SG_PV, à au moins un terminal de communication T, TI, TC, de données de signalisation du fin de changement *sg, sg_{TI}, sgrc, sge, sge_{Tl}, sge_{TC}* apte à commander le retour de l'interface utilisateur du terminal correspondant dans un état nominal.

En particulier, les données de signalisation du fin de changement *sg, sg_{TI}, sg_{TC}, sge, sge_{TI}, sge_{TC}* intègrent une commande de déblocage de l'interface utilisateur *oi_cmd.* Eventuellement, la génération de données de signalisation du changement SG_GN comporte une intégration SG_INT d'une commande de déblocage *oi_cmd* de l'interface utilisateur du terminal de communication T_IU, TI_IU, TC_lU après le changement de mode de communication SWPh.

En particulier, la génération de données de signalisation du changement SG_GN comporte une génération d'une commande de modification d'interaction MI_GN. La commande de modification d'interaction *mi_cmd* est notamment une commande de blocage *ni_cmd* de l'interface utilisateur du terminal de communication T_IU, TI_IU, TC_IU durant le changement de mode de communication SWPh, une commande de déblocage *oi_cmd* de l'interface utilisateur du terminal de communication T_IU, TI_IU, TC_IU après le changement de mode de communication SWPh, etc.

En particulier, le procédé de gestion d'interface utilisateur IU_MNGT comporte une autorisation de changement de mode de communication SW_AUTH. L'autorisation de changement de mode de communication SW_AUTH empêche le changement de mode de communication SW de la communication en cours tant que les données de signalisation du changement ne sont pas fournies à au moins l'interface utilisateur du terminal de communication T_IU, notamment du terminal correspondant TC_IU.

En particulier, l'autorisation de changement de mode de communication SW_AUTH est déclenchée par le signal de déclenchement de changement *sw_trg(m1, m2).*

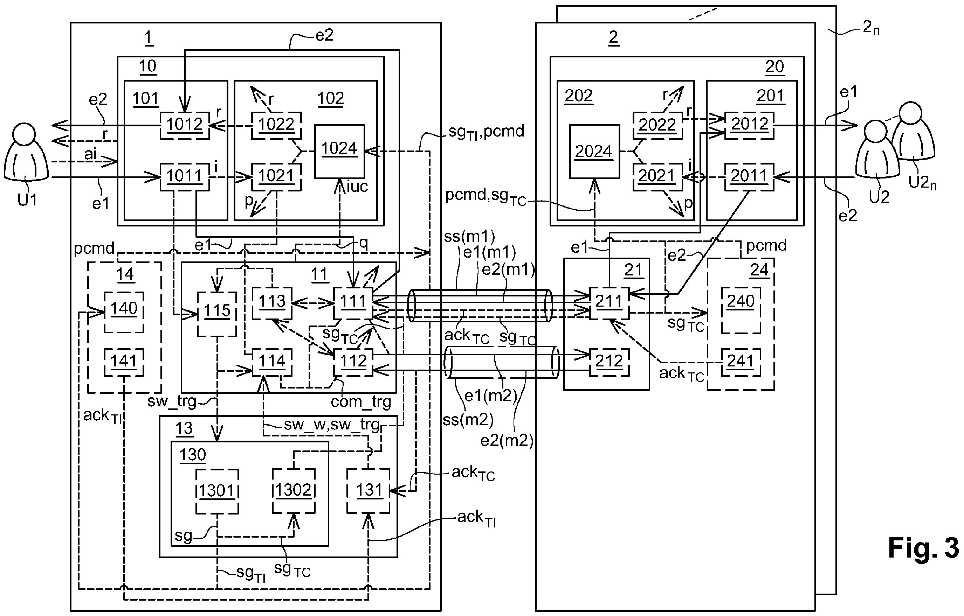

Dans une première variante, l'autorisation de changement de mode de communication SW_AUTH est placé entre l'étape de commande de changement SWC et l'étape de changement proprement dite SW (ces deux étapes sont illustrées par figure 3). Alors, l'autorisation de changement de mode de communication SW_AUTH comporte une rétention du signal de déclenchement de changement *sw_trg(m1, m2)* fourni par la commande de changement SWC tant que les données de signalisation du changement n'ont pas été fournies au(x) terminal(ux) de communication. Ainsi, le changement de mode de communication SW ne recevra le signal de déclenchement de changement *sw_trg(m1,* m2) uniquement lorsque les données de signalisation du changement auront été fournies au(x) terminal(ux) de communication.

Dans une deuxième variante, l'autorisation de changement de mode de communication SW_AUTH comporte une émission d'une commande de mise en attente sw_w (non illustrée) à destination de l'étape de changement proprement dite SW (illustrée par figure 3) déclenchée par la réception du signal de déclenchement de changement *sw_trg(m1, m2).* Ainsi, le changement de mode de communication SW met en attente la commande reçue de déclenchement de changement *sw_trg(m1, m2)* jusqu'à réception d'une commande d'autorisation de changement sw_acc de l'autorisation de changement de mode de communication SW_AUTH.

En particulier, l'autorisation de changement de mode de communication SW_AUTH comporte la réception d'une information relative à la fourniture des données de signalisation du changement préalables au changement *sgd, sgd_{TI}, sgd_{TC}* : telle qu'une information de transmission (non illustrée) provenant de l'étape de transmission SG_TR, et/ou des données d'accusé-réception du terminal de communication *ack, ack_{TI}, ack_{TC}*, etc.

En particulier, l'autorisation de changement de mode de communication SW_AUTH comporte une vérification ACK? d'information(s) relative(s) à la fourniture des données de signalisation du changement préalables au changement. Si la vérification est positive [Y], le changement de mode de communication est autorisé : suivant la variante, le signal de déclenchement de changement *sw_trg(m1, m2)* ou une commande d'autorisation *sw_acc* est transmis à l'interface de communication du terminal initiateur mettant notamment en oeuvre le changement de mode de communication SW. Si la vérification est négative [N], le changement de mode de communication reste en attente. Notamment, la vérification ACK ? est répétée jusqu'à réception d'information(s) relative(s) à la fourniture des données de signalisation du changement préalables au changement. En particulier, l'autorisation de changement de mode de communication SW_AUTH comporte une temporisation WACK. La temporisation WACK temporise la vérification ACK ? suivante soit pendant un laps de temps prédéfini, soit jusqu'à détection d'au moins une information relative à la fourniture des données de signalisation du changement préalables au changement.

Dans un mode de réalisation particulier de l'autorisation de changement SW_AUTH, la vérification ACK ? est positive [Y] lorsque tous les terminaux de communication T destinataires de données de signalisation du changement de mode de communication préalables au changement *sgd* ont fournies des données d'accusé-réception *ack.*

Un mode de réalisation du procédé de gestion IU_MNGT est un programme comprenant des instructions de code de programme pour l'exécution des étapes du procédé de gestion IU_MNGT, lorsque ledit programme est exécuté par un processeur.

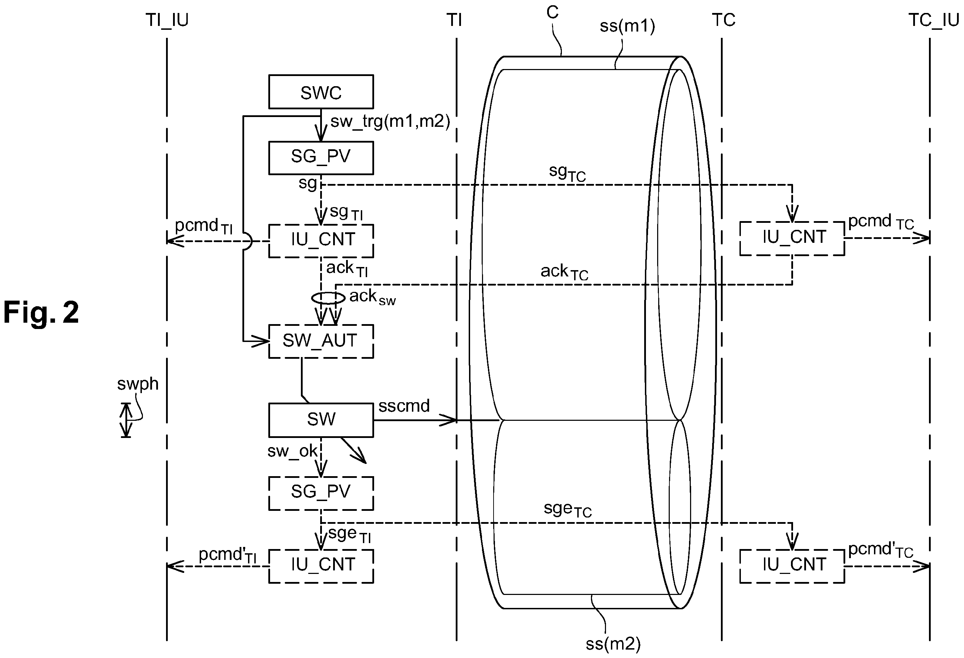

La figure 2 illustre un schéma simplifié d'un procédé de contrôle d'une interface utilisateur d'un terminal de communication lors d'une communication en cours selon l'invention.

Le procédé de contrôle d'une interface utilisateur d'un terminal de communication IU_CNT est mis en oeuvre lors d'une communication entre des terminaux de communication T dont un terminal initiateur TI et au moins un terminal correspondant TC. Le procédé de contrôle IU_CNT comporte, au moins préalablement à un changement SW, déclenché par le terminal initiateur Tl, de mode de communication de la communication en cours, une modification P_MDF d'au moins un paramètre de l'interface utilisateur du terminal de communication T_IU sur commande de données de signalisation du changement *sg, sg_{TI}, sg_{TC}* fournies par le terminal initiateur Tl.

Le procédé de contrôle d'une interface utilisateur IU_CNT est mis en oeuvre par un terminal de communication de la communication en cours parmi le terminal initiateur TI et le(s) terminal(ux) correspondant(s) TC. Ainsi, le procédé de contrôle IU_CNT modifie un paramètre de l'interface utilisateur du terminal initiateur TI_IU, respectivement d'un terminal correspondant TC_IU.

En particulier, le(s) paramètre(s) modifié(s) est (sont) au moins un paramètre d'interaction *pi* et/ou une donnée à reproduire r.

Eventuellement, la modification de paramètre P_MDF comporte une modification d'au moins un paramètre d'interaction PI_MDF modifiant un paramètre d'interaction *pi* de l'interface utilisateur du terminal de communication T_IU en fonction des données de signalisation du changement fournies *sg, sg_{TI}, sg_{TC}*, en particulier d'une commande de modification d'interaction mi_cmd intégrée dans les données de signalisation du changement fournies *sg, sg_{TI}, sg_{TC}* telle qu'une commande de blocage *ni_cmd* ou d'une commande de déblocage *oi_cmd* de l'interface utilisateur T_IU.

Eventuellement, la modification de paramètre P_MDF comporte une modification d'au moins une donnée à reproduire PR_MDF pour modifier la donnée à reproduire *r* en fonction de, et/ou y ajouter un signal de reproduction d'informations relatives au changement de mode de communication *sr_{sw}(m1,m2)* - comportant notamment un message à reproduire - intégré dans les données de signalisation du changement fournies *sg, sg_{TI}, sg_{TC}.* Ainsi, la donnée à reproduire résultant *r* comporte le signal de reproduction d'informations relatives au changement *sr_{sw}*: r ⊃ *sr_{sw}.*

En particulier, la modification de paramètre P_MDF comporte une extraction des données de signalisation du changement SG_XT. Notamment, l'extraction des données de signalisation du changement SG_XT lit, dans les données de signalisation du changement *sg, sg_{TI}, sg_{TC},* une ou plusieurs données telles que, notamment, une(des) commande(s) de modification(s) de paramètre d'interaction *mi_cmd*, et/ou un(des) signal(ux) de reproduction d'informations relatives au changement de mode de communication sr_{sw}, etc.

En particulier, la modification de paramètre P_MDF génère une commande de paramètre de l'interface utilisateur *pcmd* fournie à l'interface utilisateur du terminal de communication T_IU. La commande de paramètre *pcmd* permettant, lors de son exécution par l'interface utilisateur T_IU, de contrôle l'interface utilisateur T_IU notamment en modifiant un élément d'interaction de l'interface utilisateur (par exemple en masquant ou en interdisant l'interaction avec un ou plusieurs éléments sélectionnables contrôlant la communication en cours) et/ou en ajoutant un message de changement de mode de communication (soit une simple icône ou un simple message vocale pour patienter, soit un message plus explicite précisant le mode de communication de départ et le mode de communication d'arrivée, par exemple « la communication en cours va se poursuivre en téléphonie mobile », « la communication en cours va changer de vidéo IP en audio IP», etc. Ces messages de changement peuvent être affichés et/ou diffusé (audio), etc.

Si l'interface utilisateur contrôlée T_IU est une interface utilisateur d'un terminal correspondant TC_IU, le procédé de contrôle IU_CNT comporte, en particulier, une réception SG_RC de données de signalisation du changement *sg_{TC}.*

En particulier, le procédé de contrôle d'interface utilisateur IU_TR comporte une émission d'accusé-réception de changement SW_AR à destination du terminal initiateur Tl. L'émission d'accusé-réception de changement SW_AR est déclenchée par une des étapes parmi les suivantes :
- la réception de données de signalisation du changement SG_RC,
- le démarrage de la modification de paramètre P_MDF,
- la fin de la modification de paramètre P_MDF, notamment la commande de paramètre pcmd fournie par la modification de paramètre P_MDF, etc.

L'émission d'accusé-réception de changement SW_AR émet des données *ack* indiquant que le procédé de contrôle d'interface utilisateur IU_CNT a été notifié sg d'un changement de mode de communication, aussi nommée données d'accusé-réception *ack.*

Ainsi, les données d'accusé-réception *ack* permettent au terminal initiateur TI d'être informé que l'interface utilisateur T_IU a été ou va être modifiée. Cela permet au terminal initiateur TI de contrôler que le changement ne soit pas effectué avant.

Un mode de réalisation des procédés selon l'invention est un programme comprenant des instructions de code de programme pour l'exécution des étapes d'au moins un procédé parmi les suivants :
- procédé de gestion synchronisée d'interface utilisateur d'au moins un terminal de communication par un terminal initiateur lors d'une communication en cours,
- procédé de contrôle d'une interface utilisateur d'un terminal de communication constitué par le terminal initiateur,
- procédé de contrôle d'une interface utilisateur d'un terminal de communication constitué par un terminal correspondant,
lorsque ledit programme est exécuté par un processeur.

La figure 3 illustre un schéma simplifié des échanges dans une architecture de communication mettant en oeuvre les procédés de l'invention.

Des terminaux de communication sont en communication : notamment, ils ont établi une session de communication SS utilisant un premier mode de communication m1. Dans l'exemple de la figure 3, ces terminaux de communication sont constitués par deux terminaux de communication : un terminal initiateur TI et un terminal correspondant TC. Le terminal de communication à l'origine de la communication SS(m1) généralement nommé terminal appelant peut être n'importe lequel des deux terminaux, à savoir le terminal initiateur TI ou le terminal correspondant TC.

Ces terminaux de communication, à savoir le terminal initiateur TI et le terminal correspondant TC, peuvent utilisés plusieurs mode de communication distinct pour communiquer entre eux. Par mode de communication est entendu une interface de communication différente : première interface de communication, deuxième interface de communication, etc. (par exemple une interface de communication de téléphonie mobile, une interface de communication de téléphone IP, etc.), et/ou un format de communication différent : premier format de communication, deuxième format de communication, etc. (voix, vidéo, texte, etc.), etc.

Le terminal initiateur TI déclenche un changement *sw_trg(m1,m2)* de mode de communication d'un premier mode de communication m1 à un deuxième mode de communication m2, par exemple de video IP à audio IP, de téléphonie mobile à audio IP, etc. En particulier, le terminal initiateur TI met en oeuvre une commande de changement SWC fournissant un signal de déclenchement de changement *sw_trg(m1,m2).*

Le terminal initiateur TI met en oeuvre une fourniture de données de signalisation du changement SG_PV à destination d'au moins un terminal de communication TI, TC de la communication en cours SS(m1). Trois variantes de réalisation de la fourniture SG_PV sont alors possibles : Dans une première variante de la fourniture, la fourniture SG_PV émet des données de signalisation du changement *sg_{TC}* à destination de l'interface utilisateur du terminal correspondant TC. Dans une deuxième variante de la fourniture, les données de signalisation du changement *sg_{TI}* fournies sont à destination de l'interface utilisateur du terminal initiateur TI. Dans une troisième variante de fourniture, la fourniture SG_PV émet des données de signalisation du changement *sg_{TC}* à destination de l'interface utilisateur du terminal correspondant TC et fournit des données de signalisation du changement *sg_{TI}* à destination de l'interface utilisateur du terminal initiateur TI.

En particulier, les données de signalisation du changement *sg_{TC}* sont émises via la communication en cours SS(m1) au terminal correspondant TC.

Dans cette troisième variante, la fourniture SG_PV des données de signalisation du changement *sg_{TC}* à destination de l'interface utilisateur du terminal correspondant TC et la fourniture SG_PV des données de signalisation du changement *sg_{TI}* à destination de l'interface utilisateur du terminal initiateur TI peuvent être réalisées de manière simultanée. Ainsi, le changement est signalisé de manière synchronisée à toutes les interfaces utilisateur des terminaux de communication TI et TC de la communication en cours.

En particulier, le terminal initiateur TI met en oeuvre une gestion d'interface utilisateur (non illustrée) comportant la fourniture SG_PV de données de signalisation du changement.

En particulier, le terminal initiateur TI met en oeuvre un contrôle d'interface utilisateur IU_CNT commandant des paramètres *pcmd_{TI}* de son interface utilisateur TI_IU en fonction des données de signalisation du changement *sg_{TI}*.

En particulier, le terminal correspondant TC met en oeuvre un contrôle d'interface utilisateur IU_CNT commandant des paramètres *pcmd_{TC}* de son interface utilisateur TC_IU en fonction des données de signalisation du changement *sgrc.*

Eventuellement, dans la troisième variante, la fourniture SG_PV des données de signalisation du changement commande une exécution simultanée, voire synchronisée, du contrôle d'interface utilisateur IU_CNT mis en oeuvre par le terminal initiateur TI et du contrôle d'interface utilisateur IU_CNT mis en oeuvre par le terminal TC. Notamment, la commande d'exécution simultanée consiste en une temporisation de la fourniture SG_PV au terminal initiateur TI en fonction de délai de transmission soit prédéterminé soit mesuré entre le terminal initiateur et le terminal correspondant.

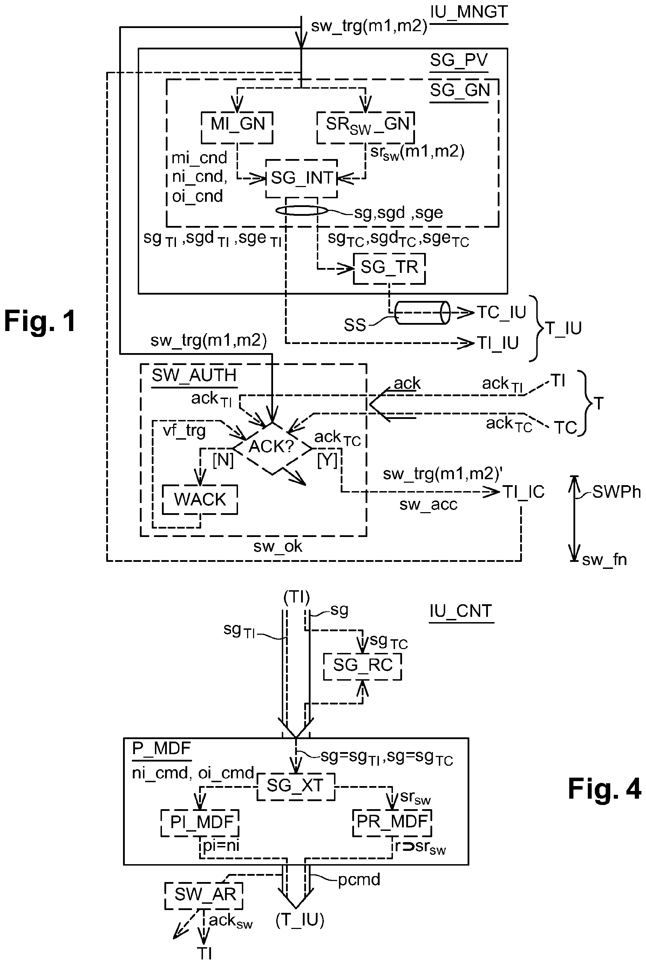

En particulier, le terminal initiateur TI comporte une autorisation de changement SW_AUTH qui détermine si le changement a été signalé au(x) teminal(ux) de communication de la communication en cours SS(m1). Notamment, l'autorisation de changement SW_AUTH temporise le changement soit pendant un laps de temps prédéterminé correspondant au temps de calcul de fourniture de données de changement et, éventuellement, de transmission au terminal correspondant, soit en attente d'un accusé-réception *ack.* Eventuellement, le procédé de gestion d'interface utilisateur IU_MNGT (illustré figure 1) comporte l'autorisation de changement SW_AUTH.

Dans une première variante du changement, la commande de changement SWC déclenche la mise en oeuvre de l'autorisation de changement SW_AUTH qui envoie alors au changement SW une commande de mise en attente sw_w (non illustrée) jusqu'à détermination que les données de signalisation du changement ont été fournies (laps de temps prédéterminé écoulé et/ou accusé(s)-réception reçu(s), etc.). A ce moment-là, l'autorisation de changement SW_AUTH envoie au changement une commande d'autorisation de changement *sw_acc* (illustré par la figure 1).

Dans une deuxième variante du changement, une ou plusieurs des étapes suivantes sont placées en interception entre la commande de changement SWC et le changement SW :
- la fourniture de données de changement SG_PV,
- l'autorisation de changement SW_AUTH,
- la gestion d'interface utilisateur IU_MNGT,
- le contrôle IU_CNT d'interface utilisateur du terminal initiateur.

Ainsi, le signal de déclenchement sw_trg ne commande le changement SW lorsque cette(ces) étape(s) sont terminée(s). Notamment, lorsque l'autorisation de changement SW_AUTH est placée en interception, il transmet le signal de déclenchement de changement sw_trg si les données de signalisation du changement ont été fournies (laps de temps prédéterminé écoulé et/ou accusé(s)-réception reçu(s), etc.).

Ainsi, suivant les variantes de réalisation de la fourniture, respectivement l'interface utilisateur du terminal initiateur TI_IU, l'interface utilisateur du terminal correspondant TC_IU, les interfaces utilisateur des terminaux initiateur TI_IU et correspondant TC_IU ont été modifiées préalablement à la phase de changement SWPh correspondant à l'exécution du changement SW.

Dans le cas où le changement de mode de communication correspondant à un changement d'interface de communication : passage d'une première interface de communication à une deuxième interface de communication, le changement de mode de communication SW comporte une fermeture de la session de communication utilisant le premier mode de communication SS(m1) et l'établissement d'une session de communication utilisant le deuxième mode de communication SS(m2) tout en restant dans la même communication C. Par exemple, dans l'historique des communications, il n'apparaîtra qu'une seule et même communication avec éventuellement conservation des échanges lorsque le mode de communication le permet, le minutage de la communication correspondra à la totalité de la communication quelle que soit le mode de communication, etc.

En particulier, le terminal initiateur TI met en oeuvre une fois le changement SW effectué une fourniture de données de signalisation du changement SG_PV qui commandent le retour de l'interface utilisateur modifiée dans un état nominal (c'est-à-dire sans les modifications effectuées préalablement au changement et tenant compte du changement de mode de communication) à destination d'au moins un terminal de communication TI, TC de la communication en cours SS(m2). Suivant la variante de réalisation de la fourniture SG_PV effectuées préalablement au changement: La fourniture SG_PV émet des données de signalisation du fin de changement *sge_{TC}* à destination de l'interface utilisateur du terminal correspondant TC ; Les données de signalisation du changement *sg*e*_{TI}* fournies sont à destination de l'interface utilisateur du terminal initiateur TI ; la fourniture SG_PV émet des données de signalisation du changement *sge_{TC}* à destination de l'interface utilisateur du terminal correspondant TC et fournit des données de signalisation du changement *sge_{TI}* à destination de l'interface utilisateur du terminal initiateur Tl.

En particulier, les données de signalisation du fin de changement *sge_{TC}* sont émises via la communication en cours SS(m2) au terminal correspondant TC.

Dans la troisième variante, la fourniture SG_PV des données de signalisation du changement *sge_{TC}* à destination de l'interface utilisateur du terminal correspondant TC et la fourniture SG_PV des données de signalisation du changement *sge_{TI}* à destination de l'interface utilisateur du terminal initiateur TI peuvent être réalisées de manière simultanée. Ainsi, le retour des interfaces à l'état nominal est réalisé de manière synchronisée à toutes les interfaces utilisateur des terminaux de communication TI et TC de la communication en cours.

En particulier, le terminal initiateur TI met en oeuvre une gestion d'interface utilisateur (non illustrée) comportant la fourniture SG_PV de données de signalisation du fin de changement.

En particulier, le terminal initiateur TI met en oeuvre un contrôle d'interface utilisateur IU_CNT commandant des paramètres *pcmd_{TI}'* de son interface utilisateur TI_IU en fonction des données de signalisation du fin de changement *sge_{TI}*.

En particulier, le terminal correspondant TC met en oeuvre un contrôle d'interface utilisateur IU_CNT commandant des paramètres *pcmd_{TC}'* de son interface utilisateur TC_IU en fonction des données de signalisation du fin de changement *sge*_{*TC*.}

Eventuellement, dans la troisième variante, la fourniture SG_PV des données de signalisation du fin de changement commande une exécution simultanée, voire synchronisée, du contrôle d'interface utilisateur IU_CNT mis en oeuvre par le terminal initiateur TI et du contrôle d'interface utilisateur IU_CNT mis en oeuvre par le terminal TC. Notamment, la commande d'exécution simultanée consiste en une temporisation de la fourniture SG_PV au terminal initiateur TI en fonction de délai de transmission soit prédéterminé soit mesuré entre le terminal initiateur et le terminal correspondant.

La figure 4 illustre un schéma simplifié d'une architecture de communication comportant des terminaux de communication mettant en oeuvre les dispositifs de l'invention.

L'architecture de communication comporte des terminaux de communication 1, 2,...2n sont en cours de communication, notamment un terminal initiateur 1 d'un changement de mode de communication de la communication en cours et un ou plusieurs terminaux correspondants 2...2n.

En particulier, les terminaux de communication 1, 2...2n comportent une interface de communication 11, 12. La communication établie au moyen d'une session de communication dans un premier mode de communication SS(m1) entre l'interface de communication 11 d'un terminal de communication 1 et au moins une interface de communication 21 d'un terminal de communication 2, 2n.

En particulier, l'interface de communication 11, 12 comporte des moyens d'établissement de session de communication 114. Les moyens d'établissement 114 établissement *com_trg* une communication en utilisant éventuellement une première interface de communication 111 avec un premier réseau de communication ou une deuxième interface de communication 112 avec un deuxième réseau de communication.

En particulier, les terminaux de communication 1, 2...2n comportent une interface utilisateur 10, 20. L'interface utilisateur 10, 20 comporte une interface de capture 1011, 2011 de l'échange e1, e2 provenant de l'utilisateur U1, U2 et une interface de reproduction 1012, 2012 de l'échange e2, e1 reçue du terminal de communication 2...2n, 1. Notamment, une interface directe avec l'utilisateur 101, 201 comporte l'interface de capture 1011, 2011 et/ou l'interface de reproduction 1012, 2012, le cas échéant. Les interfaces utilisateur 10, 20 sont connectées aux interfaces de communication respectives 11, 21 pour transmettre via la session de communication établie SS(m1) les échanges e1, e2 entre l'utilisateur U1 et l'utilisateur U2.

Le terminal initiateur 1 comporte notamment une interface de gestion 13 d'une interface utilisateur d'un terminal de communication 1, 2...2n.

L'interface de gestion 13 d'un terminal initiateur 1 ayant déclenché un changement de mode de communication lors d'une communication en cours SS(m1) entre des terminaux de communication dont le terminal initiateur et au moins un terminal correspondant, comporte un fournisseur 130 de données de signalisation du changement *sg* à une interface utilisateur 10, 20 d'un terminal de communication 1, 2, 2n de la communication en cours. Les données de signalisation du changement *sg* sont aptes à commander l'interface utilisateur 10, 20 d'un terminal de communication 1, 2, 2n. Le fournisseur 130 est déclenché préalablement au changement de mode de communication.

En particulier, le fournisseur 130 comporte un émetteur 1302 des données de signalisation du changement à au moins un terminal correspondant 2, 2n.

En particulier, le fournisseur 130 comporte un générateur 1301 de données de signalisation d'un changement en fonction du changement de mode de communication déclenché. Le générateur 1301 est déclenché préalablement au changement de mode de communication.

En particulier, l'interface de gestion 13 comporte un temporisateur de changement 131 apte à contrôler que les données de signalisation du changement *sg* soient fournies au(x) terminal(ux) de communication 1, 2...2n avant le changement de mode de communication. Le temporisateur de changement 131 est notamment implémenté en interception entre le contrôleur de changement 115 et le commutateur 114 : Il fournit la commande de déclenchement de changement *sw_trg* généré par le contrôleur de changement 115 lorsque les données de signalisation du changement ont été fournies. Dans un mode d'implémentation alternatif, le contrôleur de changement 115 commande le déclenchement *sw_trg* du changement de mode de communication directement au commutateur 114. Dans ce cas, le temporisateur de changement 115 envoie, éventuellement, dès déclenchement du changement *sw_trg*, une commande de mise en attente du changement de mode de communication *sw*_*w* au commutateur 114.

Le terminal correspondant 2 implémente une interface utilisateur 20. L'interface utilisateur 20 du terminal correspondant 2 comporte un modificateur 2024, 240 d'au moins un paramètre de l'interface utilisateur 20 du terminal correspondant 2 sur commande des données de signalisation du changement *sgrc* reçues du terminal initiateur 1. Le modificateur 2024, 240 est mis en oeuvre au moins préalablement à un changement, déclenché par le terminal initiateur 1, de mode de communication de la communication en cours.

En particulier, le modificateur 240 est implémenté dans une interface de contrôle 24 de l'interface utilisateur 20 du terminal correspondant 2 ou le modificateur 2024 est implémenté dans un processeur 202 de l'interface utilisateur.

Le terminal initiateur 1 implémente une interface utilisateur 10 d'un terminal initiateur 1. L'interface utilisateur 10 du terminal initiateur 1 comporte un modificateur 1024, 140 d'au moins un paramètre de l'interface utilisateur 10 du terminal initiateur 1 sur commande des données de signalisation du changement *sg_{TI}* fournies par le terminal initiateur 1. Le modificateur 1024, 140 est mis en oeuvre au moins préalablement à un changement, déclenché par le terminal initiateur 1, de mode de communication de la communication en cours.

En particulier, le modificateur 140 est implémenté dans une interface de contrôle 14 de l'interface utilisateur 10 du terminal initiateur 1 ou le modificateur 1024 est implémenté dans un processeur 102 de l'interface utilisateur.

En particulier, l'interface de contrôle 14, 24 comporte un émetteur d'accusé-réception 141, 241 envoyant des données d'accusé-réception *ack_{TI}*, *ack_{TC}* à l'interface de gestion 13 soit dès que l'interface de contrôle 14, 24 dispose de données de signalisation du changement *sg_{TI}, sg_{TC}*, soit dès que l'interface de contrôle 14, 24 commande *pcmd* la modification d'un paramètre de l'interface utilisateur 10, 20.

En particulier, le processeur d'interface utilisateur 102, 202 génère et/ou met en forme le signal de reproduction reproduit par l'interface de reproduction 1012, 2012. Dans le cas d'une communication, le signal utile portant, par exemple, la voix de l'utilisateur U2, U1 constituant un interlocuteur de la communication, le processeur extrait le signal vocal et le fournit comme signal de reproduction éventuellement après un décodage audio.

En particulier, le processeur d'interface utilisateur 102, 202 génère des éléments d'interaction et/ou analyse les actions d'interactions fournies par l'interface de capture 1011, 2011.

Le terminal initiateur 1 comporte:
- un commutateur 114 de mode de communication mettant en oeuvre, sur commande du terminal initiateur 1, un changement de mode de communication d'une communication en cours entre le terminal initiateur 1 et au moins un terminal correspondant 2...2n,
- une interface utilisateur 12, et
- une interface de gestion 13.

En particulier, le terminal initiateur 1 comporte, en outre :
- une première interface de communication 111 avec un premier réseau de communication mettant en oeuvre un premier mode de communication m1, et
- au moins une deuxième interface de communication 112 avec un deuxième réseau de communication distinct du premier réseau de communication mettant en oeuvre au moins un deuxième mode de communication m2.

En particulier, le terminal initiateur 1 comporte une interface de communication 11 apte à utiliser plusieurs modes de communication distincts m1, m2, notamment avec plusieurs réseaux de communication distincts.

En particulier, l'interface de communication 11 comporte un contrôleur de changement de mode de communication 115. Le contrôleur de changement 115 est déclenché soit par un analyseur de communication 113, soit par action de l'utilisateur U1.

En particulier, l'analyseur de communication 113 surveille la communication en cours et au moins un autre mode de communication disponible. Ainsi, l'analyseur de communication 113 décide de changer de mode de communication en fonction des données de surveillance et déclenche le contrôleur de changement 115.

En particulier, lorsque le changement de mode de communication correspond à un passage d'un premier mode de communication m1 utilisant un premier réseau de communication à un deuxième mode de communication m2 utilisant un deuxième réseau de communication, le contrôleur de changement 115 commande les moyens d'établissement de communication 114 de clore la session changer de mode de communication en fonction des données de surveillance et déclenche le contrôleur de changement 115.

En particulier, lorsque le changement de mode de communication correspond à un passage d'un premier mode de communication m1 utilisant un premier réseau de communication à un deuxième mode de communication m2 utilisant un deuxième réseau de communication, le contrôleur de changement 115 commande les moyens d'établissement de communication 114 de clore la session de communication SS(m1) utilisant le premier mode de communication m1 et d'ouvrir une session de communication SS(m2) utilisant le deuxième mode de communication m2 pour la communication en cours. Les moyens d'établissement de communication 114 constituent alors un commutateur de mode de communication.

En particulier, l'interface utilisateur 10, 20 comporte un contrôleur de reproduction 10122, 2022 commandant l'interface de reproduction 1012, 2012 en fonction d'un signal de reproduction *r* à destination de l'utilisateur U1, U2.

En particulier, l'interface utilisateur 10, 20 comporte une interface d'interaction 1021, 2021 apte à analyser les interactions *i* capturées par l'interface de capture 1011, 2011 notamment lors de la sélection d'un élément sélectionnable par l'utilisateur U1, U2. L'élément sélectionnable est un élément reproduit par l'interface de reproduction 1012, 2012 notamment sur commande du générateur de signal de reproduction 1022, 2022.

Le terminal correspondant 2...2n comporte :
- une interface de communication 21 apte à recevoir des données de signalisation de communication *sg_{TC}* d'un terminal initiateur 1 d'une communication en cours et à modifier des paramètres de l'interface de communication en fonction des données de signalisation de communication, les données de signalisation de communication étant apte à autoriser un changement de mode de communication de la communication en cours par le terminal correspondant, et
- une interface utilisateur 20.

En particulier, le terminal correspondant 2...2n comporte, en outre :
- une première interface de communication 211 avec un premier réseau de communication mettant en oeuvre un premier mode de communication m1, et
- au moins une deuxième interface de communication 212 avec un deuxième réseau de communication distinct du premier réseau de communication mettant en oeuvre au moins un deuxième mode de communication m2.

Considérons une communication en cours entre un premier terminal de communication 1 et un deuxième terminal de communication 2 en utilisant un premier mode de communication m1. Un reproduction 1012 à destination du premier utilisateur U1. Soit le premier utilisateur U1 commande au moyen d'une interface de capture 1011 et de l'interface d'interaction 1021 de l'interface utilisateur 10 un changement de mode de communication en sélectionnant un deuxième mode de communication suite à la reproduction des informations et/ou sur proposition d'une action de changement par l'analyseur 113, soit l'analyseur 113 envoie directement la décision de changement de mode de communication du premier mode de communication à un deuxième mode de communication en fonction de ses informations.

Le contrôleur de changement 115 reçoit la décision de changement de mode de communication, notamment le nouveau mode de communication sélectionné/décidé et déclenche le changement *sw_trg.* Le signal de déclenchement de changement *sw_trg* commande le commutateur 114. En parallèle, ce signal de déclenchement *sw_trg* déclenche l'interface de gestion ou gestionnaire 13 d'interface utilisateur qui fournit les données de signalisation du changement.

L'interface de gestion ou gestionnaire 13 est éventuellement placé en interception entre le contrôleur de changement 115 et le commutateur 114. Cela permet de s'assurer que les données de signalisation du changement *sg* soient fournies avant de déclencher *sw_trg* le changement de mode de communication par le commutateur 114. Eventuellement, le temporisateur 131 commande le commutateur 114 d'attendre *sw_w* que les données de signalisation du changement *sg* soient fournie avant d'effectuer le changement déclenché.

L'interface de gestion ou gestionnaire 13 fournit des données de signalisation du changement *sg* soit directement à l'interface utilisateur 10, 20 du(des) terminal(ux) de communication 1, 2, soit à l'interface de contrôle 14, 24 de l'interface utilisateur du terminal de communication 1, 2. Eventuellement, un émetteur d'accusé-réception 141, 241 indique *ack_{TI}, ack_{TC}* à l'interface de gestion ou gestionnaire 13 que les données de signalisation du changement ont bien été fournies. Le temporisateur 131 recevant les données d'accusé-réception déclenche le commutateur 114.

Les données de signalisation du changement sont utilisées pour modifier au moins un paramètre d'interface utilisateur 10, 20 sur commande d'une interface de contrôle 14, 24. Le modificateur 124, 2024 reçoit soit directement les données de signalisation du changement, soit une commande de modification de paramètres en fonction de ces données de signalisation du changement et contrôle le générateur de signal de reproduction 1022 et/ou l'interface d'interaction 1021 apte à générer des éléments d'interaction. Ainsi, le modificateur 124, 2024 permet de contrôler la reproduction de message d'informations relatives au changement et/ou de blocage/déblocage d'élément d'interaction.

Ainsi, les données de signalisation permettent éventuellement de bloquer la possibilité pour le(s) utilisateur(s) U1, U2 de commander au moyen d'un élément d'interaction un deuxième changement de mode de communication et/ou de clôture d'une communication en cours pendant un premier changement de mode de communication en cours d'exécution.

Le commutateur 114 déclenche éventuellement à la fin du changement de mode de communication l'interface de gestion 13 qui fournit alors des données de signalisation du fin de changement au(x) interface(s) de contrôle 14, 24 et/ou d'utilisateur 10, 20 (notamment au processeur 102, 202 de l'interface utilisateur) pour commander le retour de l'(les) interface(s) utilisateur 10, 20 dans un état nominal.

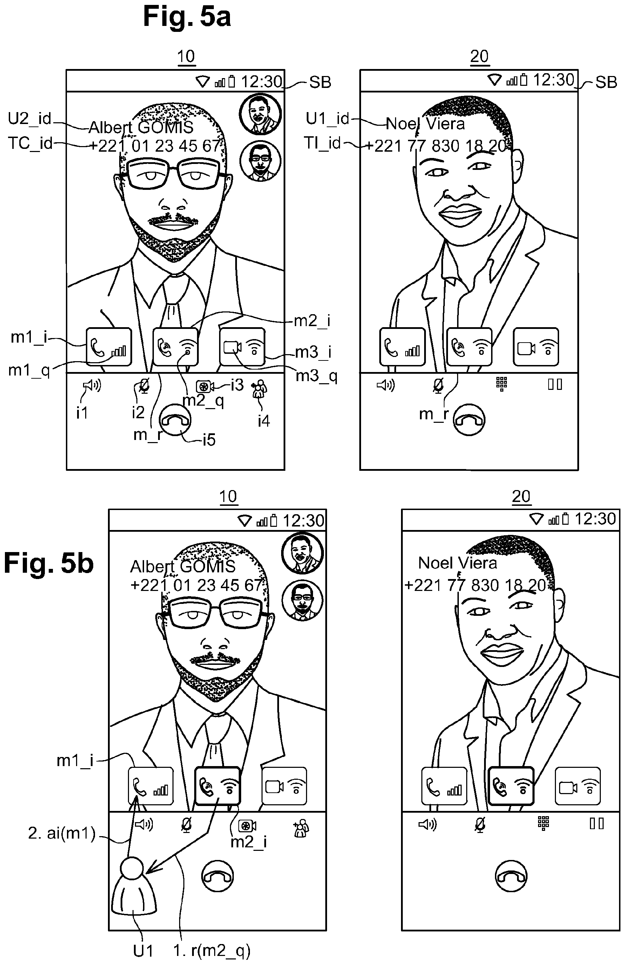

Les figures 5a à 5f montrent des illustrations simplifiées des interfaces utilisateur de terminaux de communication selon l'invention à différents instants du changement de mode de communication.

La figure 5a illustre une illustration simplifiée des interfaces utilisateur de terminaux de communication selon l'invention préalablement au déclenchement du changement de mode de communication.

L'interface utilisateur 10 du terminal initiateur reproduit notamment au moins une des informations ou éléments d'interaction parmi les suivants :
- une barre d'état SB,
- un identifiant du deuxième utilisateur U2_id du terminal correspondant TC,
- un identifiant du terminal correspondant TC_id,
- un élément indiquant le mode de communication utilisé m_r, en l'occurrence le deuxième mode de communication : appel audio IP
- des éléments d'interaction avec plusieurs modes de communication m1_i : appel de téléphonie mobile, m2_i : appel audio IP, m3_i : appel vidéo IP disponibles pour la communication en cours,
- des informations relatives avec plusieurs modes de communication m1_q, m2_q, m3_q, et
- d'autres éléments d'interactions i1, i2, i3, i4, i5 tels que un élément d'interaction avec le haut-parleur i1, un élément d'interaction avec le microphone i2, un élément d'interaction avec la caméra i3, une élément de clôture de communication i5,
- etc.

L'interface utilisateur 20 du terminal initiateur reproduit notamment au moins une des informations ou éléments d'interaction parmi les suivants :
- une barre d'état SB,
- un identifiant du premier utilisateur U1_id du terminal initiateur TI,
- un identifiant du terminal initiateur TI_id,
- un élément indiquant le mode de communication utilisé m_r,
- des éléments d'interaction avec plusieurs modes de communication m1_i, m2_i, m3_i disponibles pour la communication en cours,
- des informations relatives avec plusieurs modes de communication m1_q, m2_q, m3_q, et
- d'autres éléments d'interactions i1, i2, i3, i4, i5 tels que un élément d'interaction avec le haut-parleur i1, un élément d'interaction avec le microphone i2, un élément d'interaction avec la caméra i3, une élément de clôture de communication i5,
- etc.

La figure 5b illustre une illustration simplifiée des interfaces utilisateur de terminaux de communication selon l'invention lors du déclenchement du changement de mode de communication sur action de l'utilisateur d'un terminal initiateur.

Dans le cas de la figure 5b, le premier utilisateur U1 reçoit les informations reproduites, notamment des informations de qualité relative au mode de communication en cours 1. *r(m2_q).* Notamment, l'utilisateur U1 constate une dégradation de la qualité du mode de communication utilisé (par exemple, notifié par un changement de couleur de l'icône de qualité : passage du vert à l'orange voire au rouge). Le premier utilisateur U1 sélectionne *2.ai(m1)* l'élément d'interaction du premier mode de communication *m1_i.*

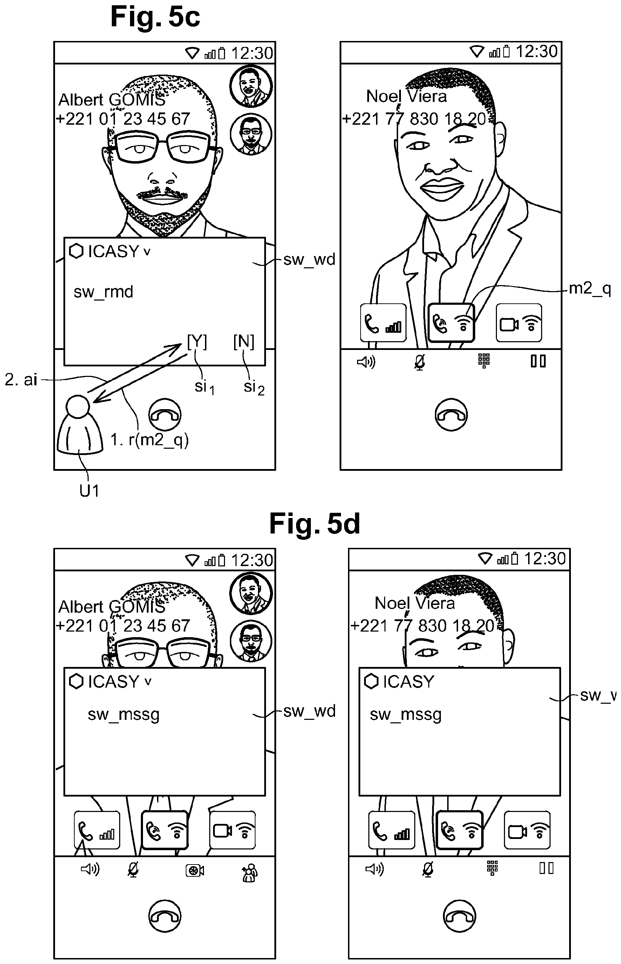

La figure 5c illustre une illustration simplifiée des interfaces utilisateur de terminaux de communication selon l'invention lors du déclenchement du changement de mode de communication sur acceptation de l'utilisateur d'un terminal initiateur d'un proposition du terminal initiateur.

Dans le cas de la figure 5c, l'interface de gestion 13 envoie des données de signalisation du changement qui commande une reproduction d'un message de proposition de changement SW_rmd notamment dans une fenêtre sw_wd de l'interface utilisateur du terminal initiateur 10 avec éventuellement des éléments d'interaction si1 et si2 permettant au premier utilisateur U1 de choisir d'accepter [Y] ou non [N] la proposition de changement.

Le premier utilisateur U1 perçoit le message reproduit *1.r(rmd)* et interagit *2.ai* pour indiquer éventuellement une demande de changement de mode de communication.

La figure 5d illustre une illustration simplifiée des interfaces utilisateur de terminaux de communication selon l'invention mettant en oeuvre une première variante de l'invention.

Suite à une demande de changement de mode de communication soit par l'analyseur 113 soit sur demande du premier utilisateur U1 par sélection d'un deuxième mode de communication telle qu'illustrée par la figure 5b ou par acceptation d'une proposition de changement de mode de communication telle qu'illustrée par la figure 5c , des données de signalisation sont fournies qui commande la reproduction d'un message d'information de basculement SW_mssg sur le(s) interface(s) utilisateur 10, 20 des terminaux de communication, notamment dans une fenêtre d'affichage SW_wd.

Suite à une demande de changement de mode de communication soit par l'analyseur 113 soit sur demande du premier utilisateur U1 par sélection d'un deuxième mode de communication telle qu'illustrée par la figure 5b ou par acceptation d'une proposition de changement de mode de communication telle qu'illustrée par la figure 5c , des données de signalisation sont fournies qui commande la reproduction d'un message d'information de basculement SW_mssg sur le(s) interface(s) utilisateur 10, 20 des terminaux de communication, notamment dans une fenêtre d'affichage SW_wd.

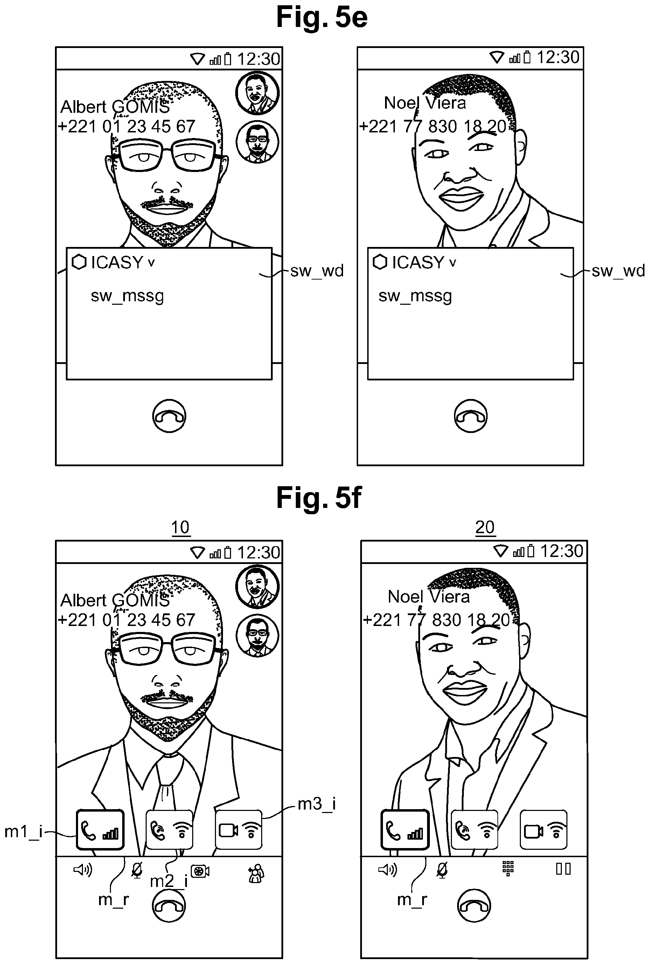

La figure 5e illustre une illustration simplifiée des interfaces utilisateur de terminaux de communication selon l'invention mettant en oeuvre une deuxième variante de l'invention.

Suite à une demande de changement de mode de communication soit par l'analyseur 113 soit sur demande du premier utilisateur U1 par sélection d'un deuxième mode de communication telle qu'illustrée par la figure 5b ou par acceptation d'une proposition de changement de mode de communication telle qu'illustrée par la figure 5c , des données de signalisation sont fournies qui commande la reproduction d'un message d'information de basculement SW_mssg sur le(s) interface(s) utilisateur 10, 20 des terminaux de communication, notamment dans une fenêtre d'affichage SW_wd.

En particulier, la fenêtre d'affichage SW_wd est reproduite dans l'interface utilisateur 10, 20 dans une position masquant les éléments d'interaction avec les modes de communication et la clôture de communication tels qu'illustrés par la figure 5a.

La figure 5f illustre une illustration simplifiée des interfaces utilisateur de terminaux de communication selon l'invention après le changement de mode de communication.

La figure 5f montre le retour des interfaces utilisateur 10, 20 dans un état nominal dans lequel le mode de communication utilisé maintenant m_r est indiqué comme étant le premier mode de communication.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Procédé de gestion d'interface utilisateur d'au moins un terminal de communication par un terminal initiateur (TI) lors d'une communication (SS) en cours entre des terminaux de communication dont le terminal initiateur (TI) et au moins un terminal correspondant (TC), le procédé de gestion d'interface utilisateur (IU_MNGT) comportant, au moins préalablement à un changement (SW), déclenché (*sw_trg*) par le terminal initiateur (TI), de mode de communication de la communication en cours, une fourniture de données de signalisation du changement (SG_PV) à l'interface utilisateur du au moins un terminal de communication (T_IU, TI_IU, TC_IU), les données de signalisation du changement (*sg, sg_{TI}, sg_{TC}, sgd, sgd_{TI}, sgd_{TC}, sge, sge_{TI}, sge_{TC}*) étant aptes à commander l'interface utilisateur d'un terminal de communication (T_IU, TI_IU, TC_IU).

2. Procédé de gestion d'interface utilisateur selon la revendication précédente, **caractérisé en ce que** la fourniture de données de signalisation du changement (SG_PV) à l'interface utilisateur du au moins un terminal de communication (TC_IU) comporte une transmission des données de signalisation du changement (SG_TR) à au moins un terminal correspondant (TC), les données de signalisation de changement (*sg_{TC}, sgd_{TC}, sge_{TC}*) étant aptes à commander l'interface utilisateur du terminal correspondant (TC_IU).

3. Procédé de gestion d'interface utilisateur selon l'une quelconque des revendications précédentes, **caractérisé en ce que** le procédé de gestion (IU_MNGT) comporte une génération (SG_GN) de données de signalisation du changement (*sg, sg_{TI}, sg_{TC}*, *sgd, sgd_{TI}, sgd_{TC}, sge, sge_{TI}, sge_{TC}*) en fonction du changement de mode de communication déclenché (*sw_trg(m1,m2)*)*.*

4. Procédé de gestion d'interface utilisateur selon l'une quelconque des revendications précédentes, **caractérisée en ce que** les données de signalisation du changement (*sg, sg_{TI}, sg_{TC}, sgd, sgd_{TI}, sgd_{TC}*) préalables au changement de mode de communication intègrent une commande de blocage (*ni_cmd*) de l'interface utilisateur du terminal de communication (T_IU, TI_IU, TC_IU) durant le changement de mode de communication (SWPh).

5. Procédé de gestion d'interface utilisateur selon l'une quelconque des revendications précédentes, **caractérisée en ce que** les données de signalisation du changement *(sg, sg_{TI}, sg_{TC}, sgd, sgd_{TI}, sgd_{TC}, sge, sge_{TI}, sge_{TC}*) intègrent un signal de reproduction (*sr_{sw}(m1,m2)*) d'informations relatives au changement de mode de communication.

6. Procédé de gestion d'interface utilisateur selon l'une quelconque des revendications précédentes, **caractérisée en ce que** le procédé de gestion (IU_MNGT) comporte, dès la fin du changement de mode de communication de la communication en cours (SW_fn), une fourniture (SG_PV), à au moins un terminal de communication (T, Tl, TC), de données de signalisation de fin du changement (*sg, sg_{TI}, sg_{TC}, sge, sge_{TI}, sge_{TC}*) apte à commander le retour de l'interface utilisateur du terminal correspondant dans un état nominal.

7. Procédé de gestion d'interface utilisateur selon la revendication précédente, **caractérisée en ce que** les données de signalisation de fin du changement (*sg, sg_{TI}, sg_{TC}, sge, sge_{TI}, sge_{TC}*) intègrent une commande de déblocage de l'interface utilisateur (*oi_cmd*).

8. Procédé de gestion d'interface utilisateur selon l'une quelconque des revendications précédentes, **caractérisée en ce que** le procédé de gestion d'interface utilisateur (IU_MNGT) comporte une autorisation de changement de mode de communication (SW_AUTH), l'autorisation de changement de mode de communication (SW_AUTH) empêchant le changement de mode de communication (SW) de la communication en cours tant que les données de signalisation du changement ne sont pas fournies à au moins l'interface utilisateur du au moins un terminal correspondant (TC_IU).

9. Procédé de contrôle d'une interface utilisateur d'un terminal de communication lors d'une communication entre des terminaux de communication (T) dont un terminal initiateur (TI) et au moins un terminal correspondant (TC), le procédé de contrôle (IU_CNT) comportant, au moins préalablement à un changement (SW), déclenché par le terminal initiateur (TI), de mode de communication de la communication en cours, une modification (P_MDF) d'au moins un paramètre de l'interface utilisateur du terminal de communication T_IU sur commande de données de signalisation du changement (*sg, sg_{TI}, sg_{TC}*) fournies par le terminal initiateur (TI).

10. Programme comprenant des instructions de code de programme pour l'exécution des étapes d'au moins un procédé parmi les suivants :
- procédé de gestion selon l'une quelconque des revendications 1 à 8,
- procédé de contrôle d'une interface utilisateur d'un terminal de communication selon la revendication précédente,
lorsque ledit programme est exécuté par un processeur.

11. interface de gestion (13) d'un terminal initiateur (1) ayant déclenché un changement de mode de communication lors d'une communication en cours (SS(m1)) entre des terminaux de communication dont le terminal initiateur et au moins un terminal correspondant, comportant un fournisseur (130) de données de signalisation du changement (*sg*) à une interface utilisateur (10, 20) d'un terminal de communication (1, 2, 2n) de la communication en cours, les données de signalisation du changement (*sg*) étant aptes à commander l'interface utilisateur (10, 20) d'un terminal de communication (1, 2, 2n), le fournisseur (130) étant déclenché préalablement au changement de mode de communication.

12. interface utilisateur (20) d'un terminal correspondant (2) lors d'une communication entre des terminaux de communication (1, 2, 2n) dont un terminal initiateur (1) et au moins un terminal correspondant (2, 2n), l'interface utilisateur (20) du terminal correspondant (2) comporte un modificateur (2024, 240) d'au moins un paramètre de l'interface utilisateur (20) du terminal correspondant (2) sur commande des données de signalisation du changement reçues (*sg_{TC}*) du terminal initiateur (1), le modificateur (2024, 240) étant mis en oeuvre au moins préalablement à un changement, déclenché par le terminal initiateur (1), de mode de communication de la communication en cours.

13. Terminal correspondant (2) comportant :
- une interface de communication (21) apte à recevoir des données de signalisation de communication (*sg_{TC}*) d'un terminal initiateur (1) d'une communication en cours et à modifier des paramètres de l'interface de communication en fonction des données de signalisation de communication, les données de signalisation de communication étant apte à autoriser un changement de mode de communication de la communication en cours par le terminal correspondant, et
- une interface utilisateur (20) selon la revendication précédente.

14. interface utilisateur (10) d'un terminal initiateur (1) lors d'une communication entre des terminaux de communication (1, 2, 2n) dont un terminal initiateur (1) et au moins un terminal correspondant (2, 2n), l'interface utilisateur (10) du terminal initiateur (1) comportant un modificateur (1024, 140) d'au moins un paramètre de l'interface utilisateur (10) du terminal initiateur (1) sur commande des données de signalisation du changement (*sg_{TI}*) fournies par le terminal initiateur (1), le modificateur (1024, 140) étant mis en oeuvre au moins préalablement à un changement, déclenché par le terminal initiateur (1), de mode de communication de la communication en cours.

15. Terminal initiateur (1)comportant :
- un commutateur (114) de mode de communication mettant en oeuvre, sur commande du terminal initiateur (1), un changement de mode de communication d'une communication en cours entre le terminal initiateur (1) et au moins un terminal correspondant (2...2n),
- une interface utilisateur (12) selon la revendication précédente, et
- une interface de gestion (13) selon la revendication 11.

## Patentansprüche

1. Verfahren zur Verwaltung einer Benutzerschnittstelle mindestens eines Kommunikationsendgeräts durch ein initiierendes Endgerät (TI) bei einer laufenden Kommunikation (SS) zwischen Kommunikationsendgeräten, darunter das initiierende Endgerät (TI) und mindestens ein entsprechendes Endgerät (TC), wobei das Verfahren zur Verwaltung einer Benutzerschnittstelle (IU_MNGT), mindestens vor einer von dem initiierenden Endgerät (TI) ausgelösten *(sw_trg)* Änderung (SW) des Kommunikationsmodus der laufenden Kommunikation eine Bereitstellung von Signalisierungsdaten des Änderung (SG_PV) an der Benutzerschnittstelle des mindestens einen Kommunikationsendgeräts (T_IU, TI_IU, TC_IU) umfasst, wobei die Signalisierungsdaten der Änderung *(sg, sg_{TI}, sg_{TC}*, *sgd, sgd_{TI}*, *sgd_{TC}*, *sge, sg_{TI}, sge_{TC})* geeignet sind, die Benutzerschnittstelle eines Kommunikationsendgeräts (T_IU, TI_IU, TC_IU) zu steuern.

2. Verfahren zur Verwaltung einer Benutzerschnittstelle nach dem vorhergehenden Anspruch, **dadurch gekennzeichnet, dass** die Bereitstellung von Signalisierungsdaten der Änderung (SG_PV) an der Benutzerschnittstelle des mindestens einen Kommunikationsendgeräts (TC_IU) eine Übertragung der Signalisierungsdaten der Änderung (SG_TR) an mindestens ein entsprechendes Endgerät (TC) umfasst, wobei die Signalisierungsdaten der Änderung *(sg_{TC}, sgd_{TC}*, *sge_{TC})* geeignet sind, die Benutzerschnittstelle des entsprechenden Endgeräts (TC_IU) zu steuern.

3. Verfahren zur Verwaltung einer Benutzerschnittstelle nach einem der vorhergehenden Ansprüche, **dadurch gekennzeichnet, dass** das Verfahren zur Verwaltung (IU_MNGT) eine Erzeugung (SG_GN) von Signalisierungsdaten der Änderung *(sg, sg_{TI}, sg_{TC}, sgd, sgd_{TI}*, *sgd_{TC}*, *sge, sge_{TI}, sge_{TC})* in Abhängigkeit von der ausgelösten Änderung des Kommunikationsmodus *(sw_trg(m1,m2))* umfasst.

4. Verfahren zur Verwaltung einer Benutzerschnittstelle nach einem der vorhergehenden Ansprüche, **dadurch gekennzeichnet, dass** die Signalisierungsdaten der Änderung *(sg, sg_{TI}, sg_{TC}, sgd, sgd_{TI}*, *sgd_{TC}*) vor der Änderung des Kommunikationsmodus einen Befehl zum Sperren *(ni_cmd)* der Benutzerschnittstelle des Kommunikationsendgeräts (T_IU, TI_IU, TC_IU) während der Änderung des Kommunikationsmodus (SWPh) beinhalten.

5. Verfahren zur Verwaltung einer Benutzerschnittstelle nach einem der vorhergehenden Ansprüche, **dadurch gekennzeichnet, dass** die Signalisierungsdaten der Änderung *(sg, sg_{TI}, sg_{TC}, sgd, sgd_{TI}*, *sgd_{TC}*, *sge, sge_{TI}, sge_{TC}*) ein Signal zur Wiedergabe *(sr_{sw} (m1,m2))* von Informationen bezüglich der Änderung des Kommunikationsmodus beinhalten.

6. Verfahren zur Verwaltung einer Benutzerschnittstelle nach einem der vorhergehenden Ansprüche, **dadurch gekennzeichnet, dass** das Verfahren zur Verwaltung (IU_MNGT), ab dem Ende der Änderung des Kommunikationsmodus der laufenden Kommunikation (SW_fn) eine Bereitstellung (SG_PV), an mindestens einem Kommunikationsendgerät (T, TI, TC), von Signalisierungsdaten für das Ende der Änderung *(sg, sg_{TI}, sg_{TC}*, *sge, sge_{TI}, sge_{TC})* umfassen, die geeignet sind, die Rückkehr der Benutzerschnittstelle des entsprechenden Endgeräts in einen Nennzustand zu steuern.

7. Verfahren zur Verwaltung einer Benutzerschnittstelle nach dem vorhergehenden Anspruch, **dadurch gekennzeichnet, dass** die Signalisierungsdaten für das Ende der Änderung *(sg, sg_{TI}, sg_{TC}, sge, sge_{TI}, sge_{TC})* einen Befehl zum Freigeben der Benutzerschnittstelle *(oi_cmd)* beinhalten.

8. Verfahren zur Verwaltung einer Benutzerschnittstelle nach einem der vorhergehenden Ansprüche, **dadurch gekennzeichnet, dass** das Verfahren zur Verwaltung einer Benutzerschnittstelle (IU_MNGT) eine Kommunikationsmodusänderungsautorisierung (SW_AUTH) umfasst, wobei die Kommunikationsmodusänderungsautorisierung (SW_AUTH) die Änderung des Kommunikationsmodus (SW) der laufenden Kommunikation verhindert, solange die Signalisierungsdaten der Änderung nicht mindestens der Benutzerschnittstelle des mindestens einen entsprechenden Endgeräts (TC_IU) bereitgestellt werden.

9. Verfahren zur Überwachung einer Benutzerschnittstelle eines Kommunikationsendgeräts bei einer Kommunikation zwischen Kommunikationsendgeräten (T), darunter ein initiierendes Endgerät (TI) und mindestens ein entsprechendes Endgerät (TC), wobei das Verfahren zur Überwachung (IU_CNT), mindestens vor einer von dem initiierenden Endgerät (TI) ausgelösten Änderung (SW) des Kommunikationsmodus der laufenden Kommunikation, eine Modifizierung (P_MDF) mindestens eines Parameters der Benutzerschnittstelle des Kommunikationsendgeräts T_IU auf Befehl von Signalisierungsdaten der Änderung *(sg, sg_{TI}, sg_{TC})*, die von dem initiierenden Endgerät (TI) bereitgestellt werden, umfasst.

10. Programm mit Programmcodeanweisungen zur Ausführung der Schritte mindestens eines unter den folgenden Verfahren:
- Verfahren zur Verwaltung nach einem der Ansprüche 1 bis 8,
- Verfahren zur Überwachung einer Benutzerschnittstelle eines Kommunikationsendgeräts nach dem vorhergehenden Anspruch,
wenn das Programm von einem Prozessor ausgeführt wird.

11. Verwaltungsschnittstelle (13) eines initiierenden Endgeräts (1), das eine Änderung des Kommunikationsmodus bei einer laufenden Kommunikation (SS(m1)) zwischen Kommunikationsendgeräten, darunter das initiierende Endgerät und mindestens ein entsprechendes Endgerät, ausgelöst hat, umfassend eine Bereitstellungseinrichtung (130) von Signalisierungsdaten der Änderung (*sg*) für eine Benutzerschnittstelle (10, 20) eines Kommunikationsendgeräts (1, 2, 2n) der laufenden Kommunikation, wobei die Signalisierungsdaten der Änderung (*sg*) geeignet sind, die Benutzerschnittstelle (10, 20) eines Kommunikationsendgeräts (1, 2, 2n) zu steuern, wobei die Bereitstellungseinrichtung (130) vor der Änderung des Kommunikationsmodus ausgelöst wird.

12. Benutzerschnittstelle (20) eines entsprechenden Endgeräts (2) bei einer Kommunikation zwischen Kommunikationsendgeräten (1, 2, 2n), darunter ein initiierendes Endgerät (1) und mindestens ein entsprechendes Endgerät (2, 2n), wobei die Benutzerschnittstelle (20) des entsprechenden Endgeräts (2) einen Modifikator (2024, 240) mindestens eines Parameters der Benutzerschnittstelle (20) des entsprechenden Endgeräts (2) auf Befehl der von dem initiierenden Endgerät (1) empfangenen Signalisierungsdaten der Änderung *(sg_{TC})* umfasst, wobei der Modifikator (2024, 240) mindestens vor einer von dem initiierenden Endgerät (1) ausgelösten Änderung des Kommunikationsmodus der laufenden Kommunikation implementiert wird.

13. Entsprechendes Endgerät (2), umfassend:
- eine Kommunikationsschnittstelle (21), die geeignet ist, Kommunikationssignalisierungsdaten *(sg_{TC})* eines initiierenden Endgeräts (1) einer laufenden Kommunikation zu empfangen und Parameter der Kommunikationsschnittstelle in Abhängigkeit von den Kommunikationssignalisierungsdaten zu modifizieren, wobei die Kommunikationssignalisierungsdaten geeignet sind, eine Änderung des Kommunikationsmodus der laufenden Verbindung durch das entsprechende Endgerät zu autorisieren, und
- eine Benutzerschnittstelle (20) nach dem vorhergehenden Anspruch.

14. Benutzerschnittstelle (10) eines initiierenden Endgeräts (1) bei einer Kommunikation zwischen Kommunikationsendgeräten (1, 2, 2n), darunter ein initiierendes Endgerät (1) und mindestens ein entsprechendes Endgerät (2, 2n), wobei die Benutzerschnittstelle (10) des initiierenden Endgeräts (1) einen Modifikator (1024, 140) mindestens eines Parameters der Benutzerschnittstelle (10) des initiierenden Endgeräts (1) auf Befehl der von dem initiierenden Endgerät (1) bereitgestellten Signalisierungsdaten der Änderung *(sg_{TI})* umfasst, wobei der Modifikator (1024, 140) mindestens vor einer von dem initiierenden Endgerät (1) ausgelösten Änderung des Kommunikationsmodus der laufenden Kommunikation implementiert wird.

15. Initiierendes Endgerät (1), umfassend:
- einen Umschalter (114) des Kommunikationsmodus, der auf Befehl des initiierenden Endgeräts (1) eine Änderung des Kommunikationsmodus einer laufenden Kommunikation zwischen dem initiierenden Endgerät (1) und mindestens einem entsprechenden Endgerät (2...2n) implementiert,
- eine Benutzerschnittstelle (12) nach dem vorhergehenden Anspruch, und
- eine Verwaltungsschnittstelle (13) nach Anspruch 11.

## Claims

1. Method for the management of a user interface of at least one communication terminal by an initiator terminal (TI) during an ongoing communication (SS) between communication terminals including the initiator terminal (TI) and at least one correspondent terminal (TC), the user interface management method (IU_MNGT) comprising, at least prior to a change (SW), triggered *(sw_trg)* by the initiator terminal (TI), of communication mode of the ongoing communication, provision of change signalling data (SG_PV) to the user interface of the at least one communication terminal (T_IU, TI_IU, TC_IU), the change signalling data (*sg, sg_{TI}, sgrc, sgd, sgd_{TI}*, *sgd_{TC}*, *sge, sg_{TI}, sge_{TC})* being able to control the user interface of a communication terminal (T_IU, TI_IU, TC_IU).

2. User interface management method according to the preceding claim, **characterized in that** the provision of change signalling data (SG_PV) to the user interface of the at least one communication terminal (TC_IU) comprises transmission of the change signalling data (SG_TR) to at least one correspondent terminal (TC), the change signalling data *(sg_{TC}, sgd_{TC}*, *sge_{TC})* being able to control the user interface of the correspondent terminal (TC_IU).

3. User interface management method according to either one of the preceding claims, **characterized in that** the management method (IU_MNGT) comprises generation (SG_GN) of change signalling data *(sg, sg_{TI}, sg_{TC}, sgd, sgd_{TI}, sgd_{TC}*, *sge, sge_{TI}, sge_{TC}*) on the basis of the triggered change of communication mode *(sw_trg(m1,m2)).*

4. User interface management method according to any one of the preceding claims, **characterized in that** the change signalling data (*sg, sg_{TI}, sg_{TC}, sgd, sgd_{TI}*, *sgd_{TC}*) prior to the change of communication mode integrate a blocking command *(ni_cmd)* to block the user interface of the communication terminal (T_IU, TI_IU, TC_IU) during the change of communication mode (SWPh).

5. User interface management method according to any one of the preceding claims, **characterized in that** the change signalling data (*sg, sg_{TI}, sgrc, sgd, sgd_{TI}, sgd_{TC}*, *sge, sge_{TI}, sge_{TC}*) integrate an information reproduction signal *(sr_{sw}(m1,m2))* for reproducing information relating to the change of communication mode.

6. User interface management method according to any one of the preceding claims, **characterized in that** the management method (IU_MNGT) comprises, when the change of communication mode of the ongoing communication ends (SW_fn), provision (SG_PV), to at least one communication terminal (T, TI, TC), of end of change signalling data *(sg, sg_{TI}, sg_{TC}, sge, sge_{TI}, sge_{TC}*) able to command the return of the user interface of the correspondent terminal to a nominal state.

7. User interface management method according to the preceding claim, **characterized in that** the end of change signalling data *(sg, sg_{TI}, sg_{TC}, sge, sge_{TI}, sge_{TC}*) integrate an unblocking command to unblock the user interface *(oi_cmd).*

8. User interface management method according to any one of the preceding claims, **characterized in that** the user interface management method (IU_MNGT) comprises an authorization to change communication mode (SW_AUTH), the authorization to change communication mode (SW_AUTH) preventing the change of communication mode (SW) of the ongoing communication for as long as the change signalling data are not provided to at least the user interface of the at least correspondent terminal (TC_IU).

9. Method for controlling a user interface of a communication terminal during a communication between communication terminals (T) including an initiator terminal (TI) and at least one correspondent terminal (TC), the control method (IU_CNT) comprising, at least prior to a change (SW), triggered by the initiator terminal (TI), of communication mode of the ongoing communication, modification (P_MDF) of at least one parameter of the user interface of the communication terminal T_IU upon command from change signalling data *(sg, sg_{TI}, sg_{TC}*) provided by the initiator terminal (TI) .

10. Program comprising program code instructions for executing the steps of at least one of the following methods:
- a management method according to any one of Claims 1 to 8,
- a method for controlling a user interface of a communication terminal according to the preceding claim, when said program is executed by a processor.

11. Management interface (13) of an initiator terminal (1) that has triggered a change of communication mode during an ongoing communication (SS(m1)) between communication terminals including the initiator terminal and at least one correspondent terminal, comprising a provider (130) for providing change signalling data (*sg*) to a user interface (10, 20) of a communication terminal (1, 2, 2n) in the ongoing communication, the change signalling data (*sg*) being able to control the user interface (10, 20) of a communication terminal (1, 2, 2n), the provider (130) being triggered prior to the change of communication mode.

12. User interface (20) of a correspondent terminal (2) during a communication between communication terminals (1, 2, 2n) including an initiator terminal (1) and at least one correspondent terminal (2, 2n), the user interface (20) of the correspondent terminal (2) comprising a modifier (2024, 240) for modifying at least one parameter of the user interface (20) of the correspondent terminal (2) upon command from the change signalling data *(sg_{TC})* received from the initiator terminal (1), the modifier (2024, 240) being implemented at least prior to a change, triggered by the initiator terminal (1), of communication mode of the ongoing communication.

13. Correspondent terminal (2) comprising:
- a communication interface (21) able to receive communication signalling data *(sg_{TC})* from an initiator terminal (1) in an ongoing communication and to modify parameters of the communication interface on the basis of the communication signalling data, the communication signalling data being able to authorize a change of communication mode of the ongoing communication by the correspondent terminal, and
- a user interface (20) according to the preceding claim.

14. User interface (10) of an initiator terminal (1) during a communication between communication terminals (1, 2, 2n) including an initiator terminal (1) and at least one correspondent terminal (2, 2n), the user interface (10) of the initiator terminal (1) comprising a modifier (1024, 140) for modifying at least one parameter of the user interface (10) of the initiator terminal (1) upon command from the change signalling data (*sg_{TI}*) provided by the initiator terminal (1), the modifier (1024, 140) being implemented at least prior to a change, triggered by the initiator terminal (1), of communication mode of the ongoing communication.

15. Initiator terminal (1) comprising:
- a switch (114) for switching communication mode, implementing, upon command from the initiator terminal (1), a change of communication mode in an ongoing communication between the initiator terminal (1) and at least one correspondent terminal (2...2n),
- a user interface (12) according to the preceding claim, and
- a management interface (13) according to Claim 11.
